# FASCICULE DE BREVET EUROPEEN

(11) **EP 2 753 844 B1**
(45) Date de publication et mention de la délivrance du brevet: **26.08.2015**
(21) Numéro de dépôt: 12762351.0
(22) Date de dépôt: 04.09.2012
(51) Int. Cl.: F16F 15/023, F02C 7/06

(54) **TURBOMACHINE COMPORTANT UN FILM FLUIDE D'AMORTISSEMENT D'UN PALIER DE GUIDAGE D'UN ARBRE DE TURBOMACHINE ET PROCÉDÉ DE RÉGLAGE DE L'ÉPAISSEUR D'UN TEL FILM FLUIDE D'AMORTISSEMENT**
TURBOMASCHINE MIT EINEM DÄMPFUNGSFLÜSSIGKEITSFILM ZUR DÄMPFUNG EINES FÜHRUNGSLAGERS EINER WELLE DER TURBOMASCHINE UND VERFAHREN ZUR EINSTELLUNG DER DICKE EINES SOLCHEN DÄMPFUNGSFLÜSSIGKEITSFILMS
TURBO ENGINE COMPRISING A DAMPING FLUID FILM FOR DAMPING A GUIDE BEARING OF A SHAFT OF THE TURBO ENGINE AND METHOD OF ADJUSTING THE THICKNESS OF SUCH A DAMPING FLUID FILM

(30) Priorité: 05.09.2011 FR 1157836
(43) Date de publication de la demande: 16.07.2014
(73) Titulaire: Snecma, 75015 Paris (FR)
(72) Inventeur: MORREALE, Serge, René, F-77550 Moissy-Cramayel Cedex (FR); VIAL, Albert, F-77550 Moissy-Cramayel Cedex (FR); CHEVILLOT, Fabrice, F-77550 Moissy-Cramayel Cedex (FR)
(74) Mandataire: Bringer, Mathieu
(86) Numéro de dépôt international: PCT/FR2012/051974
(87) Numéro de publication internationale: WO 2013/034843

(56) Documents cités:
- EP-A1- 0 335 779
- DE-A1- 3 122 053
- US-A- 5 056 935
- US-A- 5 215 384

## Description

La présente invention concerne le domaine des films fluides d'amortissement d'un palier de guidage d'un arbre d'une turbomachine et plus particulièrement le réglage de l'épaisseur d'un tel film fluide d'amortissement.

Les paliers de guidage utilisés dans une turbomachine comprennent une bague intérieure et une bague extérieure enserrant des organes roulants, par exemple des billes ou des rouleaux. De manière classique, la bague extérieure est montée de manière solidaire sur une partie fixe du carter de la turbomachine et la bague intérieure est montée de manière solidaire sur un arbre de la turbomachine, par exemple, par frettage. Le palier permet ainsi de guider l'arbre en rotation par rapport au carter de la turbomachine.

Dans certaines configurations, le palier est monté entre deux arbres rotatifs de la turbomachine. Ce type de palier est couramment désigné palier « interarbre », un tel palier étant par exemple connu de la demande de brevet FR 2 939 843 A1 de la société SNECMA, ou encore du document EP 0335 779 A1 qui est considéré comme l'état de la technique le plus proche.

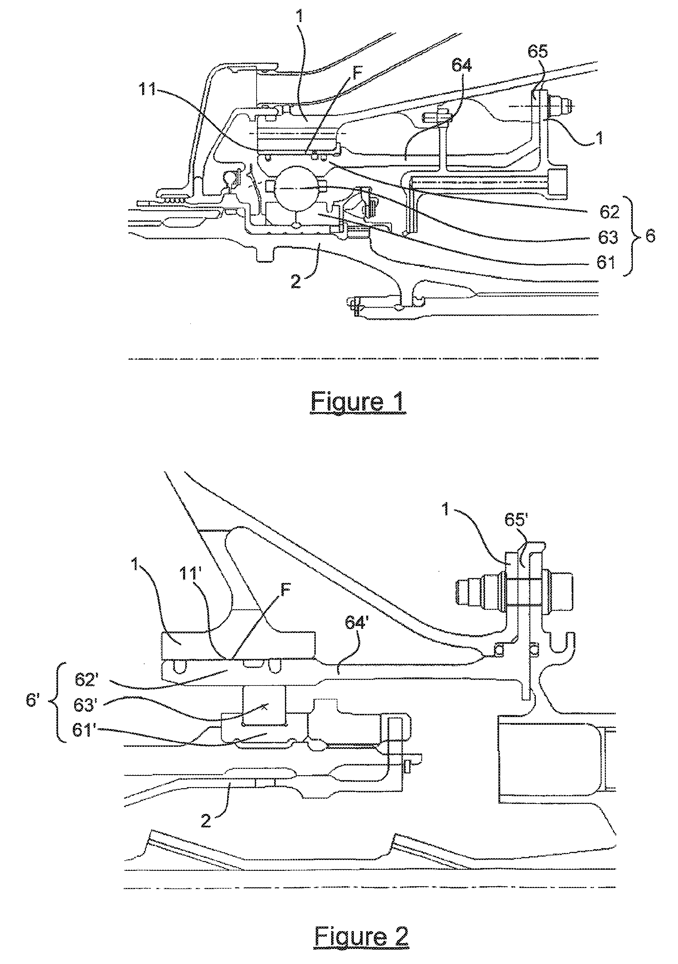

A titre d'exemple, en référence aux figures 1 et 2, un turboréacteur pour aéronef comporte de manière classique un carter intermédiaire 1 dans lequel est guidé en rotation au moins un arbre rotatif basse pression 2. En référence à la figure 1, l'arbre basse pression 2 est guidé à son extrémité amont dans le carter intermédiaire 1 par un palier de guidage amont 6, connu de l'homme du métier sous la désignation de « palier 1 ». Le palier de guidage amont 6 comporte une bague radialement extérieure 62 montée dans un logement annulaire 11 du carter 1. La bague extérieure 62 est par ailleurs reliée de manière solidaire au carter intermédiaire 1 par un flasque aval 64 terminé à son extrémité aval par une bride radiale 65 de fixation au carter 1. Le palier de guidage amont 6 comporte en outre une bague intérieure 61 solidaire de l'arbre basse pression 2 et des organes roulants 63 enserrés par les bagues 61, 62. Dans cet exemple, la bague intérieure 61 est frettée sur l'arbre basse pression 2 de manière à empêcher toute translation et toute rotation de la bague intérieure 61 du palier 6 par rapport à l'arbre basse pression 2.

De manière similaire, en référence à la figure 2, l'arbre basse pression 2 est guidé à son extrémité aval dans le carter intermédiaire 1 par un palier de guidage aval 6', connu de l'homme du métier sous la désignation de « palier 5 ». La bague intérieure 61' du palier de guidage amont 6' est frettée sur l'arbre basse pression 2 tandis que la bague extérieure 62' est montée dans un logement 11' du carter intermédiaire 1 et comporte un flasque de liaison 64' avec une bride radiale de fixation 65' permettant la fixation de la bague extérieure 62' de manière solidaire au carter 1 en aval des organes roulants 63' comme représenté sur la figure 2.

Pour amortir les mouvements de l'arbre basse pression 2, les paliers de guidage 6, 6' comportent chacun un film fluide d'amortissement F emprisonné radialement entre la surface externe de la bague extérieure 62, 62' du palier 6, 6' et la surface interne du logement 11, 11' du carter intermédiaire 1 et emprisonné axialement par des segments d'étanchéité. Les segments d'étanchéité, connus de l'homme du métier, permettent avantageusement de calibrer les sections de fuite pour obtenir la pression de fluide désirée dans le film fluide d'amortissement pour un faible débit de fluide d'amortissement.

Un film fluide d'amortissement d'un palier de guidage, connu de l'homme du métier sous la désignation « squeeze-film », permet d'améliorer la réponse dynamique de la turbomachine à un régime de fonctionnement donné. Le film fluide d'amortissement permet, en particulier, de limiter les vibrations de l'arbre de la turbomachine au cours de son fonctionnement.

La qualité de l'amortissement résulte principalement de la pression du fluide d'amortissement et de l'épaisseur radiale du film fluide d'amortissement. Lors de la conception d'une turbomachine, il est connu de faire varier la pression du film fluide d'amortissement de manière à déterminer l'amortissement optimal. Étant donné que l'épaisseur radiale du film fluide d'amortissement dépend majoritairement de la géométrie des pièces adjacentes, c'est-à-dire des dimensions du logement 11, 11' du carter intermédiaire 1 et des dimensions de la bague extérieure 62, 62' du palier 6, 6', il n'est pas possible de régler de manière simple l'épaisseur radiale du film fluide d'amortissement de manière à déterminer l'amortissement optimal. La seule solution consiste à disposer de pièces adjacentes de différents diamètres et de faire des essais avec chacune d'elle. Compte tenu du nombre de pièces à tester, de la durée de montage d'une pièce et des délais de conceptions réduits d'une turbomachine, il est en pratique impossible de déterminer par essais l'épaisseur optimale du film fluide d'amortissement pour une turbomachine d'un type donné.

Une solution de contournement consisterait à déterminer par calcul l'épaisseur optimale du film fluide d'amortissement. En pratique, les calculs fournissent des épaisseurs théoriques imprécises ne permettant pas d'obtenir un amortissement optimal. En effet, le réglage de l'épaisseur du film fluide d'amortissement doit être réalisé avec précision, une variation d'épaisseur de 0,1 à 0,2 mm modifiant de manière importante les performances d'amortissement.

Afin d'éliminer au moins certains de ces inconvénients, l'invention concerne une turbomachine comportant un carter, un arbre de turbomachine s'étendant axialement, un palier de guidage de l'arbre de turbomachine dans le carter, le palier de guidage comportant une bague intérieure circonférentielle solidaire de l'arbre de turbomachine et une bague extérieure circonférentielle montée dans des moyens de logement du carter et enserrant des organes roulants, une cavité d'amortissement, destinée à recevoir un fluide d'amortissement afin de former un film fluide d'amortissement du palier de guidage, étant délimitée radialement entre une surface externe de la bague extérieure et une surface interne des moyens de logement, turbomachine dans laquelle la surface externe de la bague extérieure et la surface interne des moyens de logement sont des surfaces coniques.

Par surface conique, on entend une surface globalement conique, la surface pouvant être cylindrique à au moins une de ses extrémités.

De manière avantageuse, le film fluide d'amortissement possède une forme conique pour guider l'arbre de la turbomachine dans le carter. En choisissant la pente des surfaces coniques et ou l'écart axial entre les deux surfaces coniques, on règle avantageusement l'épaisseur du film fluide d'amortissement ce qui permet d'optimiser l'amortissement. Le réglage de l'épaisseur du film fluide d'amortissement peut ainsi être réalisé sans mettre en oeuvre des opérations de montage/démontage du palier de guidage ce qui procure un gain de temps.

De préférence, la surface externe de la bague extérieure et la surface interne des moyens de logement sont des surfaces coniques de révolution ayant sensiblement le même angle de cône.

Ainsi, pour un écart axial donné, l'épaisseur radiale du film fluide d'amortissement est constante entre les deux surfaces coniques. Il suffit de modifier l'écart axial entre les deux surfaces coniques pour obtenir l'épaisseur radiale souhaitée.

De préférence encore, la turbomachine comprend des moyens de réglage de la position axiale relative de la surface externe de la bague extérieure du palier par rapport à la surface interne des moyens de logement. En intégrant de tels moyens de réglage à la turbomachine, il est simple et pratique de modifier l'épaisseur du film fluide d'amortissement sans remplacer des éléments principaux de la turbomachine tels que le carter ou le palier de guidage de la turbomachine. On peut alors réaliser de manière rapide et efficace des mesures d'amortissement pour plusieurs épaisseurs et ainsi déterminer l'épaisseur optimale.

Selon un aspect de l'invention, les moyens de réglage sont montés entre les moyens de logement et le carter. Ainsi, de manière avantageuse, il suffit de modifier la position axiale des moyens de logement par rapport au carter pour régler l'épaisseur du film fluide d'amortissement. De manière préférée, les moyens de réglage comportent une cale de réglage placée entre les moyens de logement et le carter. Une telle cale de réglage permet avantageusement de compenser les défauts d'usinage de la chambre d'amortissement de manière à former une chambre de volume optimal pour améliorer l'amortissement en fonctionnement.

Selon un autre aspect de l'invention, les moyens de réglage sont montés entre la bague extérieure du palier et le carter. Ainsi, de manière avantageuse, il suffit de modifier la position axiale de la bague extérieure par rapport au carter pour régler l'épaisseur du film fluide d'amortissement. De manière préférée, les moyens de réglage comportent une cale de réglage placée entre la bague extérieure et le carter.

Selon un aspect de l'invention, les moyens de logement comportent un anneau de logement circonférentiel monté dans une cavité annulaire du carter, l'anneau de logement comprenant un corps longitudinal dont la surface externe est en contact avec la surface interne de la cavité annulaire du carter et dont la surface interne est conique. Autrement dit, le palier de guidage est monté dans la cavité annulaire du carter par l'intermédiaire de l'anneau de logement.

De manière préférée, la turbomachine comporte des moyens de réglage de la position axiale de l'anneau de logement par rapport au carter. En modifiant la position de l'anneau de logement dans la cavité annulaire du carter, on règle l'épaisseur du film fluide d'amortissement. De préférence, les moyens de réglage comportent une cale de réglage montée de manière amovible à l'anneau de logement. Ainsi, il suffit d'associer à l'anneau de logement une cale de réglage de dimension axiale déterminée pour régler l'épaisseur du film fluide d'amortissement.

De préférence, la cale de réglage et l'anneau de logement sont solidarisés au carter par au moins une vis de fixation. La cale de réglage est ainsi aisément amovible de l'anneau de logement.

De manière préférée, l'anneau de logement comporte une bride radiale, formée à une extrémité longitudinale du corps, sur laquelle sont fixés les moyens de réglage. Ainsi, les moyens de réglage permettent d'augmenter la dimension axiale de la bride radiale ce qui modifie la position axiale de l'anneau de logement.

Selon un aspect de l'invention, le corps longitudinal de l'anneau de logement comporte une pluralité d'orifices de distribution radiaux de manière à permettre l'alimentation du film fluide d'amortissement. De manière préférée, le corps longitudinal de l'anneau de logement comporte une gorge annulaire dans laquelle est formée la pluralité d'orifices de distribution radiaux, la gorge annulaire permettant de répartir de manière homogène le fluide dans la cavité d'amortissement.

De préférence, la turbomachine comporte au moins un segment d'étanchéité amont et au moins un segment d'étanchéité aval délimitant longitudinalement la cavité d'amortissement.

Selon un autre aspect de l'invention, les moyens de logement se présentent sous la forme d'une cavité annulaire formée dans le carter. Autrement dit, la bague extérieure du palier de guidage est montée directement dans le carter de la turbomachine, sans intermédiaire.

L'invention concerne en outre un procédé de réglage de l'épaisseur d'un film fluide d'amortissement d'un palier de guidage d'un arbre d'une turbomachine dans un carter de turbomachine, le palier de guidage comportant une bague intérieure circonférentielle solidaire de l'arbre de turbomachine et une bague extérieure circonférentielle montée dans des moyens de logement du carter et enserrant des organes roulants, une cavité d'amortissement, destinée à recevoir un fluide d'amortissement afin de former un film fluide d'amortissement du palier de guidage, étant délimitée radialement entre une surface externe conique de la bague extérieure et une surface interne conique des moyens de logement, le procédé comportant une étape de déplacement axial de la bague extérieure relativement aux moyens de logement de manière à modifier l'épaisseur radiale du film fluide d'amortissement.

Ainsi, il n'est pas nécessaire de remplacer le palier de guidage de la turbomachine pour modifier l'épaisseur du film fluide d'amortissement. On peut ainsi tester de manière rapide un grand nombre d'épaisseurs de film fluide d'amortissement.

Selon un aspect de l'invention, le procédé comporte une étape de positionnement d'une cale de réglage entre les moyens de logement et le carter de la turbomachine.

Selon un autre aspect de l'invention, le procédé comporte une étape de positionnement d'une cale de réglage entre la bague extérieure du palier de guidage et le carter de la turbomachine.

L'invention sera mieux comprise à la lecture de la description qui va suivre, donnée uniquement à titre d'exemple, et se référant aux dessins annexés sur lesquels :
- la figure 1 est une vue en coupe schématique d'une turbomachine comportant un palier de guidage amont d'un arbre rotatif d'une turbomachine (déjà commentée) ;
- la figure 2 est une vue en coupe axiale schématique d'une turbomachine comportant un palier de guidage aval d'un arbre rotatif d'une turbomachine (déjà commentée) ;
- la figure 3 est une vue en coupe axiale schématique d'une première forme de réalisation d'une turbomachine selon l'invention comportant un film fluide d'amortissement d'un palier de guidage amont ;
- la figure 4 est une vue rapprochée du film fluide d'amortissement de la figure 3 ; et
- la figure 5 est une vue en coupe axiale schématique d'une deuxième forme de réalisation d'une turbomachine selon l'invention comportant un film fluide d'amortissement d'un palier de guidage aval.

Il faut noter que les figures exposent l'invention de manière détaillée pour mettre en oeuvre l'invention, lesdites figures pouvant bien entendu servir à mieux définir l'invention le cas échéant.

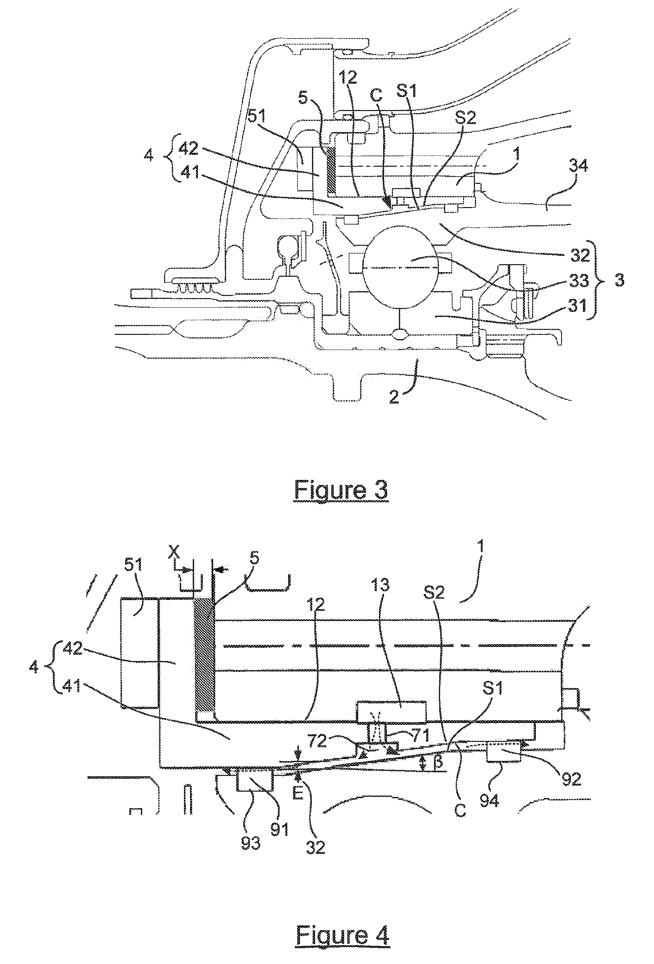

Une première forme de réalisation d'une turbomachine selon l'invention comportant un palier de guidage amont est représentée aux figures 3 et 4, la figure 5 représentant une deuxième forme de réalisation d'une turbomachine selon l'invention comportant un palier de guidage aval.

Dans les deux formes de réalisation, la turbomachine comporte un carter intermédiaire 1 dans lequel sont guidés en rotation au moins un arbre rotatif basse pression 2 comme présenté précédemment. La turbomachine comporte un palier de guidage 3 monté entre le carter intermédiaire 1 et un arbre rotatif basse pression 2 pour le guider en rotation. A cet effet, le carter 1 comporte des moyens de logement du palier de guidage 3 dans le carter 1. Le palier de guidage 3 et les moyens de logement sont configurés ensemble de manière à ménager entre eux une cavité d'amortissement C dans laquelle circule un fluide d'amortissement pour former un film fluide d'amortissement du palier de guidage 3 dont l'épaisseur radiale peut être réglée.

### Première forme de réalisation

Selon la première forme de réalisation, en référence aux figures 3 et 4, le palier de guidage 3 comporte une bague intérieure circonférentielle 31 et une bague extérieure circonférentielle 32 enserrant des organes roulants 33, par exemple, des billes ou des rouleaux. Le palier de guidage 3 représenté à la figure 3 comporte des billes. La bague intérieure 31 du palier 3 est montée solidairement à l'arbre rotatif basse pression 2 de la turbomachine, par exemple, par frettage. La surface radialement interne de la bague intérieure 31 est cylindrique de manière être glissée extérieurement à l'arbre basse pression 2 comme représenté sur la figure 3.

La bague extérieure 32 du palier 3 est montée solidairement au carter intermédiaire 1 par un flasque 34 s'étendant longitudinalement vers l'aval. Le flasque 34 est de préférence terminé à son extrémité aval par une bride radiale de fixation au carter 1. La surface radialement externe de la bague extérieure 32 est conique comme représenté aux figures 3 et 4. De manière préférée, la surface externe de la bague extérieure 32 est évasée de l'amont vers l'aval. Autrement dit, la section axiale de la surface externe de la bague extérieure 32 s'étend obliquement par rapport à l'axe de la turbomachine comme représenté sur la figure 3.

Par la suite, la surface externe conique de la bague extérieure 32 du palier 3 est désignée première surface conique S1.

### Anneau de logement

Selon la première forme de réalisation, en référence aux figures 3 et 4, la bague extérieure 32 du palier de guidage 3 est montée dans le carter 1 par l'intermédiaire d'un anneau de logement 4.

L'anneau de logement circonférentiel 4 comporte un corps longitudinal 41 monté dans une cavité annulaire 12 du carter intermédiaire 1. Le corps longitudinal 41 est terminé à son extrémité amont par une bride radiale 42 s'étendant radialement vers l'extérieur comme représenté sur les figures 3 et 4, la bride radiale 42 formant une couronne annulaire amont.

Toujours en référence à la figure 3, le corps longitudinal 41 de l'anneau de logement 4 comporte une surface externe cylindrique, qui est montée en contact avec la surface interne de la cavité annulaire 12 du carter intermédiaire 1, et une surface interne conique qui est en regard avec la première surface conique S1 de la bague extérieure 32 du palier de guidage 3.

Par la suite, la surface interne conique du corps longitudinal 41 de l'anneau de logement 4 est désignée deuxième surface conique S2.

Ainsi, la première surface conique S1 est montée en regard de la deuxième surface conique S2 de manière à délimiter radialement entre elles une cavité d'amortissement C comme représenté à la figure 4. Cette cavité d'amortissement C est circonférentielle et est destinée à être alimentée en fluide d'amortissement, de préférence de l'huile d'amortissement, pour former un film fluide d'amortissement entre l'anneau de logement 4 et le palier de guidage 3. Par la suite, en référence à la figure 4, on définit l'épaisseur E de la cavité d'amortissement C comme la distance radiale séparant les surfaces coniques S1, S2, l'épaisseur E correspondant à l'épaisseur du film fluide d'amortissement en fonctionnement.

De manière préférée, les surfaces coniques S1, S2 sont des surfaces coniques de révolution dont l'angle de cône est sensiblement égal. Dans cet exemple, en référence à la figure 4, l'angle de cône β des surfaces coniques S1, S2 est sensiblement égal à 2°.

De manière avantageuse, lorsque l'on translate l'anneau de logement 4 selon la direction axiale, vers l'amont ou vers l'aval, on modifie l'épaisseur E du film fluide d'amortissement du fait de la conicité des surfaces S1, S2 qui délimitent radialement la cavité d'amortissement C. Le réglage de l'épaisseur E du film fluide d'amortissement en fonction de la position axiale de l'anneau de logement 4 sera présenté par la suite.

Dans cet exemple, la surface interne de la cavité annulaire 12 du carter intermédiaire 1 comporte une rainure annulaire 13 alimentée en fluide d'amortissement comme représenté sur la figure 4. L'anneau de logement 4 comporte une pluralité d'orifices de distribution 71 s'étendant radialement à travers le corps longitudinal 41 qui permettent de conduire le fluide d'amortissement depuis la rainure d'alimentation 13 vers la cavité d'amortissement C formée entre les surfaces coniques S1, S2. La surface conique S2 de l'anneau de logement 4 comporte, dans cet exemple, une rainure annulaire de répartition 72 dans laquelle débouchent les orifices de distribution 71 afin de permettre une répartition homogène du fluide d'amortissement dans la cavité d'amortissement C en amont et en aval des orifices de distribution 71.

En référence à la figure 4, la turbomachine comporte des moyens d'étanchéité amont 91 et aval 92 se présentant sous la forme de segments d'étanchéité annulaires 91, 92, s'étendant radialement. Les segments d'étanchéité annulaires 91, 92 permettent de délimiter longitudinalement la chambre d'amortissement C et ainsi emprisonnent de manière étanche le fluide d'amortissement. Dans cet exemple, chaque segment d'étanchéité annulaire 91, 92 possède une section de fuite calibrée de manière à permettre au fluide d'amortissement de sortir de la chambre d'amortissement C. Chaque segment d'étanchéité annulaire 91, 92 comprend dans cet exemple une fente radiale (non représentée) s'étendant sur une plage angulaire de l'ordre de 1° entre les deux extrémités du segment 91, 92. Ainsi, au cours du fonctionnement, le fluide d'amortissement est renouvelé dans la chambre d'amortissement C.

De manière préférée, la surface conique S1 de la bague extérieure 32 du palier de guidage 3 comporte au moins deux logements annulaires radiaux 93, 94 agencés pour loger respectivement les segments d'étanchéité annulaires 91, 92. Ainsi les segments d'étanchéité annulaires 91, 92 sont capables de se translater radialement dans leurs logements 93, 94 pour permettre la translation axiale de l'anneau de logement 4. En fonctionnement, les segments d'étanchéité annulaires 91, 92 sont appuyés sur la surface conique S2 de l'anneau de logement 4 sous l'effet des forces centrifuges pour délimiter longitudinalement la chambre d'amortissement C. De manière préférée, la surface externe de la bague extérieure 32 du palier 3 et la surface interne de l'anneau de logement 4 comportent à leurs extrémités longitudinales des parties cylindriques entre lesquelles sont montés les segments d'étanchéité annulaires 91, 92.

L'anneau de logement 4 comporte de manière avantageuse des moyens de réglage de la position axiale relative de la surface conique S2 de l'anneau de logement 4 par rapport à la surface conique S1 du palier de guidage 3. Dans cet exemple, en référence à la figure 3, les moyens de réglage se présentent sous la forme d'une cale de réglage 5 montée de manière amovible à l'anneau de logement 4 et destinée à venir se placer entre une face aval de la bride radiale 42 de l'anneau de logement 4 et une face amont du carter intermédiaire 1. La cale de réglage 5 se présente sous la forme d'un anneau circulaire dont la dimension radiale est sensiblement égale à celle de la partie radiale 42 de l'anneau de logement 4. La dimension axiale X de la cale de réglage 5 permet de régler la position axiale de l'anneau de logement 4 par rapport au carter intermédiaire 1 et donc par rapport à la bague extérieure 32 du palier de guidage 3 qui est montée solidairement au carter intermédiaire 1.

Du fait de la conicité des surfaces S1, S2 qui délimitent radialement la cavité d'amortissement C, l'épaisseur E du film fluide amortissement est directement fonction de la dimension axiale X de la cale de réglage 5. Dans cet exemple, un déplacement axial ΔX entraîne une modification d'épaisseur ΔE du film fluide amortissement conformément à la formule suivante *ΔE* = Δ*X* · tan(), dans laquelle β correspond à l'angle de cône des surfaces coniques de révolution S1, S2.

L'anneau de logement 4 et la cale de réglage 5 sont reliés au carter intermédiaire 1 par une pluralité de vis de fixation 51 s'étendant de l'amont vers l'aval à travers des orifices longitudinaux de l'anneau de logement 4 et de la cale de réglage 5 pour être réceptionnés dans des orifices de fixation ménagés dans la face amont du carter intermédiaire 1 sur laquelle la cale de réglage 5 est en appui comme représenté sur la figure 4.

### Procédé de réglage

Pour augmenter l'épaisseur E du film fluide d'amortissement, un opérateur retire les vis de fixation 51 et enlève la cale de réglage 5 pour la remplacer par une cale de réglage 5 possédant une dimension axiale plus importante. A cet effet, il déplace l'anneau de logement 4 vers l'amont afin de ménager un espace axial suffisant entre la bride radiale 42 et le carter 1. La translation axiale vers l'amont de l'anneau de logement 4 entraîne une augmentation de l'épaisseur radiale E du film fluide d'amortissement du fait de la conicité des surfaces S1, S2 délimitant radialement le film fluide d'amortissement. La nouvelle cale de réglage 5 est fixée au carter 1 avec l'anneau de logement 4 par serrage des vis de fixation 51 dans les orifices de fixation du carter 1.

En fonctionnement, le fluide d'amortissement circule depuis la rainure d'alimentation 13 du carter 1 vers la cavité d'amortissement C en passant dans les orifices de distribution 71 de l'anneau de logement 4 comme représenté sur la figure 4. Grâce à l'invention, on peut mesurer de manière rapide et précise l'amortissement dynamique de film fluide d'amortissement pour une pluralité d'épaisseurs E de film fluide d'amortissement. De manière similaire, pour diminuer l'épaisseur E du film fluide d'amortissement, il suffit d'utiliser une cale de réglage 5 possédant une dimension axiale plus faible.

### Deuxième forme de réalisation

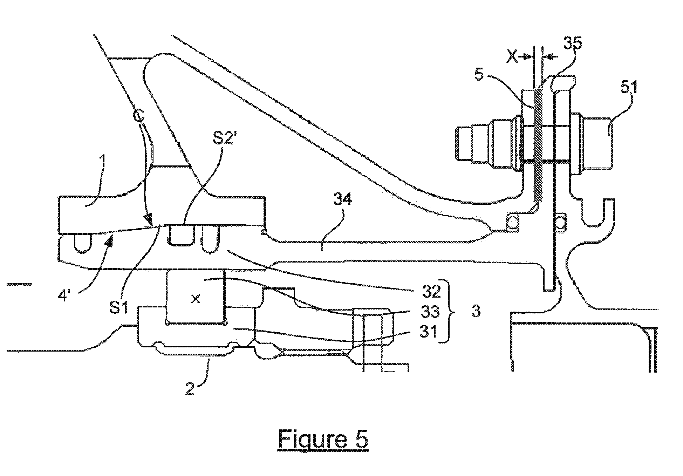

Une deuxième forme de réalisation de l'invention est décrite en référence à la figure 5. Les références utilisées pour décrire les éléments de structure ou fonction identique, équivalente ou similaire à celles des éléments des figures 3 et 4 sont les mêmes, pour simplifier la description. D'ailleurs, l'ensemble de la description de la forme de réalisation des figures 3 et 4 n'est pas reprise, cette description s'appliquant aux éléments de la figure 5 lorsqu'il n'y a pas d'incompatibilités. Seules les différences notables, structurelles et fonctionnelles, sont décrites.

De manière similaire à la première forme de réalisation, la turbomachine comprend un palier de guidage 3 comportant une bague intérieure circonférentielle 31 et une bague extérieure circonférentielle 32 enserrant des organes roulants 33 qui se présentent sur la figure 5 sous la forme de rouleaux. La bague extérieure 32 du palier 3 est montée solidairement au carter intermédiaire 1 par un flasque 34 s'étendant longitudinalement vers l'aval. Le flasque 34 est de préférence terminé à son extrémité aval par une bride radiale 35 de fixation au carter 1. De manière similaire à la première forme de réalisation, la surface radialement externe de la bague extérieure 32 est conique comme représenté à la figure 5.

Contrairement à la première forme de réalisation dans laquelle le film fluide d'amortissement est formé entre la bague extérieure 32 du palier de guidage 3 et un anneau de logement 4 solidaire du carter 1, le film fluide d'amortissement est formé directement entre la bague extérieure 32 du palier de guidage 3 et une cavité du carter 1 dans la deuxième forme de réalisation de l'invention. Autrement dit, en référence à la figure 5, le carter intermédiaire 1 comporte une cavité annulaire 4' dont la surface interne S2' est conique de manière à délimiter radialement avec la surface conique de la bague extérieure 32 du palier 3 une cavité d'amortissement C similaire à celle de la première forme de réalisation.

Dans cette deuxième forme de réalisation, la turbomachine comporte des moyens de réglage de la position axiale de la bague extérieure 32 du palier de guidage 3 par rapport au carter intermédiaire 1. Dans cet exemple, en référence à la figure 5, les moyens de réglage se présentent sous la forme d'une cale de réglage 5 montée de manière amovible à la bride radiale 35 de la bague extérieure 32. La cale de réglage 5 est placée entre une bride radiale de fixation du carter 1 et une bride radiale de fixation 35 de la bague extérieure 32 du palier de guidage 3. La dimension axiale X de la cale de réglage 5 permet de régler la dimension axiale de la bride radiale de fixation 35 de la bague extérieure 32 et donc la position axiale de la bague extérieure 32 du palier de guidage 3 par rapport à la cavité annulaire 4' du carter 1.

Du fait de la conicité des surfaces S1, S2' qui délimitent radialement la cavité d'amortissement C, l'épaisseur E du film fluide amortissement est directement fonction de la dimension axiale X de la cale de réglage 5. De manière similaire à la première forme de réalisation, la cale de réglage 5 est reliée au carter 1 par des vis de fixation 51.

Pour régler l'épaisseur E du film fluide d'amortissement, un opérateur retire les vis de fixation 51 et enlève la cale de réglage 5 pour la remplacer par une nouvelle cale de réglage 5 possédant une dimension axiale adaptée.

En fonction de la configuration de la turbomachine, on modifie la position axiale des moyens de logement du palier de guidage et/ou de la bague extérieure du palier de guidage.

## Revendications

1. Turbomachine comportant un carter (1) comportant une cavité annulaire (12) dans lequel est monté un anneau de logement circonférentiel (4) dont la surface externe est en contact avec la surface interne de la cavité annulaire (12) du carter (1), un arbre de turbomachine (2) s'étendant axialement, un palier de guidage (3) de l'arbre de turbomachine (2) dans le carter (1), le palier de guidage (3) comportant une bague intérieure circonférentielle (31) solidaire de l'arbre de turbomachine (2) et une bague extérieure circonférentielle (32) montée dans l'anneau de logement (4) et enserrant des organes roulants (33), une cavité d'amortissement (C), destinée à recevoir un fluide d'amortissement afin de former un film fluide d'amortissement du palier de guidage (3), étant délimitée radialement entre une surface externe de la bague extérieure (31) et une surface interne de l'anneau de logement (4), la surface externe (S1) de la bague extérieure (32) et la surface interne (S2) de l'anneau de logement (4) étant des surfaces coniques, turbomachine **caractérisée en ce qu'**elle comporte des moyens de réglage de la position axiale de l'anneau de logement (4) par rapport au carter (1), les moyens de réglage comportant une cale de réglage (5) montée de manière amovible à l'anneau de logement (4).

2. Turbomachine selon la revendication 1, dans lequel la surface externe (S1) de la bague extérieure (32) et la surface interne (S2) de l'anneau de logement (4) sont des surfaces coniques de révolution ayant sensiblement le même angle de cône (β).

3. Dispositif selon l'une des revendications 1 à 2 dans lequel la cale de réglage (5) et l'anneau de logement (4) sont solidarisés au carter (1) par au moins une vis de fixation (51).

4. Dispositif selon l'une des revendications 1 à 3, dans lequel l'anneau de logement (4) comporte une bride radiale (42), formée à une extrémité longitudinale du corps (41), sur laquelle sont fixés les moyens de réglage (5).

5. Dispositif selon l'une des revendications 1 à 4, dans lequel le corps longitudinal (41) de l'anneau de logement (4) comporte une pluralité d'orifices de distribution radiaux (71).

6. Procédé de réglage de l'épaisseur d'un film fluide d'amortissement d'un palier de guidage (3) d'un arbre d'une turbomachine (2) dans un carter de turbomachine (1) comportant une cavité annulaire (12) dans lequel est monté un anneau de logement circonférentiel (4) dont la surface externe est en contact avec la surface interne de la cavité annulaire (12) du carter (1), le palier de guidage (3) comportant une bague intérieure circonférentielle (31) solidaire de l'arbre de turbomachine (2) et une bague extérieure circonférentielle (32) montée dans l'anneau de logement (4) et enserrant des organes roulants (33), une cavité d'amortissement (C), destinée à recevoir un fluide d'amortissement afin de former un film fluide d'amortissement du palier de guidage (3), étant délimitée radialement entre une surface externe conique (S1) de la bague extérieure (32) et une surface interne conique (S2) de l'anneau de logement (4), le procédé comportant une étape de positionnement d'une cale de réglage (5) entre l'anneau de logement (4) et le carter (1) afin de déplacer axialement la bague extérieure (32) relativement à l'anneau de logement (4) de manière à modifier l'épaisseur radiale du film fluide d'amortissement.

## Patentansprüche

1. Turbomaschine mit einem Gehäuse (1), welches einen ringförmigen Hohlraum (12) aufweist, in dem ein umlaufender Gehäusering (4) angebracht ist, dessen äußere Oberfläche in Kontakt mit der inneren Oberfläche des ringförmigen Hohlraums (12) des Gehäuses (1) ist, einer Welle der Turbomaschine (2), die sich axial erstreckt, einem Führungslager (3) der Welle der Turbomaschine (2) in dem Gehäuse (1), wobei das Führungslager (3) einen umlaufenden, inneren Ring (31), der mit der Welle der Turbomaschine (2) fest verbunden ist, und einen umlaufenden, äußeren Ring (32) aufweist, der in dem Gehäusering (4) angebracht ist und Wälzkörper (33) einschließt, einem Dämpfungshohlraum (C), der zur Aufnahme eines Dämpfungsfluids bestimmt ist, um einen Fluidfilm zur Dämpfung des Führungslagers (3) zu bilden, der radial zwischen einer äußeren Oberfläche des äußeren Rings (31) und einer inneren Oberfläche des Gehäuserings (4) begrenzt ist, wobei die äußere Oberfläche (S1) des äußeren Rings (32) und die innere Oberfläche (S2) des Gehäuserings (4) Kegelflächen sind, **dadurch gekennzeichnet, dass** die Turbomaschine Mittel zum Einstellen der axialen Position des Gehäuserings (4) mit Bezug auf das Gehäuse (1) aufweist, wobei die Mittel zum Einstellen einen Einstellkeil (5) aufweisen, der lösbar an dem Gehäusering (4) angebracht ist.

2. Turbomaschine nach Anspruch 1, wobei die äußere Oberfläche (S1) des äußeren Rings (32) und die innere Oberfläche (S2) des Gehäuserings (4) konische Rotationsflächen sind, die im Wesentlichen den gleichen Kegelwinkel (β) haben.

3. Vorrichtung nach einem der Ansprüche 1 bis 2, wobei der Einstellkeil (5) und der Gehäusering (4) mit dem Gehäuse (1) durch mindestens eine Befestigungsschraube (51) verbunden sind.

4. Vorrichtung nach einem der Ansprüche 1 bis 3, wobei der Gehäusering (4) einen radialen Flansch (42) aufweist, der an einem Längsende des Körpers (41) aufgebildet ist, auf dem die Mittel zum Einstellen (5) befestigt sind.

5. Vorrichtung nach einem der Ansprüche 1 bis 4, wobei der längliche Körper (41) des Gehäuserings (4) eine Vielzahl von radialen Verteileröffnungen (71) aufweist.

6. Verfahren zur Einstellung der Dicke eines Dämpfungsfluidfilms eines Führungslagers (3) einer Welle einer Turbomaschine (2) in einem Gehäuse (1) der Turbomaschine (2) mit einem ringförmigen Hohlraum (12), in dem ein umlaufender Gehäusering (4) angebracht ist, dessen äußere Oberfläche in Kontakt mit der inneren Oberfläche des ringförmigen Hohlraums (12) des Gehäuses (1) ist, einer Welle der Turbomaschine (2), die sich axial erstreckt, einem Führungslager (3) der Welle der Turbomaschine (2) in dem Gehäuse (1), wobei das Führungslager (3) einen umlaufenden, inneren Ring (31), der mit der Welle der Turbomaschine (2) fest verbunden ist, und einen umlaufenden, äußeren Ring (32) aufweist, der in dem Gehäusering (4) angebracht ist und Wälzkörper (33) einschließt, einem Dämpfungshohlraum (C), der zur Aufnahme eines Dämpfungsfluids bestimmt ist, um einen Fluidfilm zur Dämpfung des Führungslagers (3) zu bilden, der radial zwischen einer äußeren Oberfläche (S1) des äußeren Rings (31) und einer inneren Oberfläche (S2) des Gehäuserings (4) begrenzt ist, wobei das Verfahren einen Schritt zur Positionierung eines Einstellkeils (5) zwischen dem Gehäusering (4) und dem Gehäuse (1) aufweist, um axial den äußeren Ring (32) relativ zu dem Gehäusering (4) zu verschieben, um die radiale Dicke des Dämpfungsfluidfilms zu verändern.

## Claims

1. Turbine engine including a casing (1) with an annular cavity (12) in which is fitted a circumferential housing ring (4) the outer surface of which is in contact with the inner surface of the annular cavity (12) of the casing (1), a turbine engine shaft (2) extending axially, a guide bearing (3) for guiding the turbine engine shaft (2) in the casing (1), the guide bearing (3) having an inner circumferential ring (31) rigidly connected to the turbine engine shaft (2) and an outer circumferential ring (32) fitted in the housing ring (4) and gripping rolling members (33), a damping cavity (C), intended to receive a damping fluid in order to form a damping fluid film for damping the guide bearing (3), said cavity being delimited radially between an outer surface of the outer ring (31) and an inner surface of the housing ring (4), the outer surface (S1) of the outer ring (32) and the inner surface (S2) of the housing ring (4) being conical surfaces, a turbine engine **characterised in that** it has means for adjusting the axial position of the housing ring (4) relative to the casing (1), the adjustment means including a shim (5) fitted removably to the housing ring. (4).

2. Turbine engine according to claim 1, in which the outer surface (S1) of the outer ring (32) and the inner surface (S2) of the housing ring (4) are conical surfaces of revolution with substantially the same cone angle (β).

3. Device according to either claim 1 or claim 2, in which the shim (5) and the housing ring (4) are rigidly connected to the casing (1) by at least one retaining bolt (51).

4. Device according to any one of claims 1 to 3, in which the housing ring (4) includes a radial flange (42), formed at a longitudinal extremity of the body (41), to which the adjustment means (5) are fixed.

5. Device according to any one of claims 1 to 4, in which the longitudinal body (41) of the housing ring (4) has a plurality of radial distribution orifices (71).

6. Method for adjusting the thickness of a damping fluid film for damping a guide bearing (3) of a turbine engine shaft (2) in a turbine engine casing (1) comprising an annular cavity (12) in which there is fitted a circumferential housing ring (4) the outer surface of which is in contact with the inner surface of the annular cavity (12) of the casing (1), the guide bearing (3) having an inner circumferential ring (31) rigidly connected to the turbine engine shaft (2) and an outer circumferential ring (32) fitted in the housing ring (4) and gripping rolling members (33), a damping cavity (C), intended to receive a damping fluid in order to form a damping fluid film for damping the guide bearing (3), said cavity being delimited radially between an outer conical surface (S1) of the outer ring (32) and an inner conical surface (S2) of the housing ring (4), the method including a step of positioning a shim (5) between the housing ring (4) and the casing (1) in order to axially displace the outer ring (32) relative to the housing ring (4) so as to modify the radial thickness of the damping fluid film.
